(19) Europäisches Patentamt
European Patent Office
Office européen des brevets

(11) EP 1 202 372 B1

(12) EUROPEAN PATENT SPECIFICATION

(45) Date of publication and mention of the grant of the patent:
**21.12.2005 Bulletin 2005/51**

(51) Int Cl.⁷: **H01M 10/40**, H01M 4/60, H01M 4/02

(21) Application number: **01124795.4**

(22) Date of filing: **17.10.2001**

(54) **Method for manufacturing polymer battery**

Verfahren zur Herstellung einer Polymerbatterie

Procédé de fabrication d'une batterie à polymère

(84) Designated Contracting States:
**DE GB**

(30) Priority: **25.10.2000 JP 2000325406**

(43) Date of publication of application:
**02.05.2002 Bulletin 2002/18**

(73) Proprietor: **Nec Tokin Corporation**
**Sendai-shi, Miyagi (JP)**

(72) Inventors:
- **Kurosaki, Masato**
  **Minato-ku, Tokyo (JP)**
- **Kamisuki, Hiroyuki**
  **Minato-ku, Tokyo (JP)**
- **Nakagawa, Yuuji**
  **Minato-ku, Tokyo (JP)**
- **Nishiyama, Toshihiko**
  **Minato-ku, Tokyo (JP)**
- **Harada, Gaku**
  **Minato-ku, Tokyo (JP)**

(74) Representative: **Glawe, Delfs, Moll**
**Patentanwälte**
**Postfach 26 01 62**
**80058 München (DE)**

(56) References cited:
**EP-A- 0 971 426**
**EP-A- 0 987 775**
**EP-A- 1 071 148**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 202 372 B1

## Description

### BACKGROUND OF THE INVENTION

1. Field of the Invention

The present invention relates to a method for producing a polymer battery using a doped electroconductive polymer as an active material for a cathode and an anode, and more particularly to a method for producing a polymer battery with improved current and discharge characteristics using different electroconductive polymers for the cathode and the anode.

2. Description of the Related Art

In electronic equipment such as portable communication terminals which require reduction in weight, the secondary batteries used as their power supplies are miniaturized and thinned. Polymer batteries are increasingly used as the power supplies of electronic equipment such as portable communication terminals because of their light weight and thin thickness by using electroconductive polymers as active materials for electrodes.

An example of such a polymer battery is disclosed in Japanese Patent Application Laid-open No. Hei 5-315188. In this technology, the same polypyrrole is used as the electroconductive polymer in cathode and anode active materials of a polymer battery.

However, in the case of the above-mentioned conventional polymer battery, it is difficult to manufacture a polymer battery that operates at a high voltage because the same kind of electroconductive polymer is used for both the cathode and the anode.

Generally, the voltage of a battery depends largely on the difference between the redox potential of the cathode active material and that of the anode active material. Thus, use of electroconductive polymers of different types in the cathode and the anode can increase the difference in potential larger than that in a case of using electroconductive polymers of the same type.

Therefore, a polymer battery that changes the types of electroconductive polymers in the cathode and the anode to operate at a higher voltage has been proposed. In this type of polymer battery, the dopant species as active materials for the electroconductive polymers of the cathode and the anode differ from the ion species in the electrolytic solution, so that when charging and discharging, namely, doping and undoping, are repeated, substitution of the dopant by the ion in the electrolytic solution gradually proceeds. As a result, the internal structures of the cathode and the anode are subjected to changes with a lapse of time, resulting in a great change in discharging characteristics. That is, there arises the problem of unstable cycle characteristics.

Japanese Patent Application Laid-open No. Hei 2000-260422 discloses a polymer battery in which the cathode and the anode contain different active materials whose dopant species is the same as the ion species in the electrolytic solution to improve the cycle characteristics. The publication discloses an example of a polymer battery manufactured as follows. That is, a film of paste containing polyphenylquinoxaline is formed on a current collector to manufacture an anode and similarly a film of paste containing polyaniline is formed on a current collector to manufacture a cathode. Then, the electrodes are electrochemically or chemically treated in an aqueous sulfuric acid solution to dope sulfate ions to each of the electrodes. The battery uses an aqueous sulfuric acid solution as the electrolytic solution.

However, in this prior art, a dopant is introduced to each of the electrodes after the formation of the cathode and the anode, which causes some problems. That is, the introduction of the dopant requires a long period of time. And in addition, in a case where the formed cathode or anode initially contains other anions in this prior art, even doping of each of the electrodes with the same anion as that contained in the electrolytic solution, the polymer battery shows the unstable characteristics in initial charging and discharging.

### SUMMARY OF THE INVENTION

Under the circumstances, an obj ect of the present invention is to provide a method for producing a polymer battery comprising different electroconductive polymers as cathode and anode active materials, having improved initial and long-term charging and discharging characteristics (cycle characteristics).

In view of solving the above problems, the inventors of the present invention have made extensive research. As a result, they have found out that manufacture of a polymer battery by using electroconductive polymers having different structures from each other for cathode active material and anode active material constituting the polymer battery, which have been preliminarily doped with the same anion as the anion to be contained in the electrolytic solution to form the electrodes, can decrease changes in the structure of the cathode and anode when charging and discharging

are repeated, to thereby be able to obtain extremely excellent cycle characteristics. The present invention is based on this finding.

That is, a major feature of the method for producing a polymer battery according to the present invention is to manufacture a cathode and an anode using cathode and anode active materials that are composed of different electroconductive polymers from each other which have been preliminarily doped with the same anion as that derived from a single acidthat occupies a major part of anions contained in the electrolytic solution of a polymer battery.

In the present invention, the single acid contained in the electrolytic solution is preferably a protonic acid having a pKa value in a first dissociation stage in water of at least pKa<2. More preferably, an inorganic strong protonic acid is used as the single acid to be contained in the electrolytic solution.

In the method for producing a polymer battery according to the present invention, pastes containing active materials composed of electroconductive polymers differing from each other which are doped with the same dopant are used to form a cathode and an anode on a current collector, respectively. At the same time, an electrolytic solution that has dissolved therein a supporting electrolyte containing the same anion as the dopant used to dope the electroconductive polymers of the cathode and anode. Because of this construction, changes in volume and structure of the cathode and the anode in charging and discharging of the polymer battery can be decreased, thereby being capable of achieving high high-rate characteristics and improving cycle characteristics.

## BRIEF DESCRIPTION OF THE DRAWINGS

FIG. 1 is a cross-sectional view showing an example of a battery structure manufactured by the method for producing a polymer battery according to the present invention.

FIG. 2 is a diagram illustrating cycle characteristics of the polymer battery manufactured according to one example of the present invention.

FIG. 3 is a diagram illustrating cycle characteristics of the polymer battery manufactured according to a comparative example having a conventional construction.

FIG. 4 is a diagram illustrating high-rate discharging characteristics in the polymer battery manufactured according to Example 1 of the present invention.

FIG. 5 is a diagram illustrating high-rate discharging characteristics in the polymer battery manufactured according to Comparative Example 1 having a conventional construction.

## DETAILED DESCRIPTION OF THE PREFERRED EMBODIMENTS

Polymer batteries utilize oxidation and reduction reactions of electroconductive polymers in the active materials of cathode and anode during charging and discharging processes . In the oxidation reaction, cations of the electroconductive polymer are generated and the number of dopant ions contained as counter-anions is increased correspondingly to cause doping. On the other hand, in the reduction reaction, the number of current of cations in the electroconductive polymer is decreased and the number of dopant ions as counter-anions is decreased correspondingly to cause undoping.

Therefore, in the doping process (oxidation reaction), anions existing in a free state in the electrolytic solution in the vicinity of cations in the electroconductive polymer are incorporated into the electrode material as dopant ions (counter-anions). On the contrary, in the undoping process (reduction reaction), dopant ions fixed as counter-anions against the cation species in the electroconductive polymer become free and released into the electrolytic solution in the vicinity of the electrode material.

If the anion derived from the support electrolyte contained in the electrolytic solution and the anion released in the undoping process are different from each other at the time of discharging (charging), and upon charging (discharging) the anion incorporated as dopant ion in the doping process is not always the same as the anion released in the undoping process that occurred immediately before. Therefore, in accordance with charging and discharging, the dopant in the electroconductive polymers in the cathode and anode materials is gradually exchanged by the anion derived from the support electrolyte in the electrolytic solution. The exchange of dopant starts on the surface of the electrode material that contacts the electrolytic solution and gradually extends to the depth of the electrode material. As a result, when the charging and discharging are repeated, the exchange of the dopant by the anion gradually extends throughout the electrode material to gradually approach to an equilibrium state.

In the polymer battery produced by the method of the present invention, the electroconductive polymers used as cathode and anode active materials are doped with the same dopant (anion) in advance and further, the most part of the anion in the electrolytic solution is selected to be of the same ion species as that of the dopant. Therefore, the polymer battery produced by the method of the present invention is of the construction where exchange of dopants in

the electroconductive polymers does not occur in its nature.

Generally, it is more preferable that the anion contained in advance in the electrolytic solution consists essentially of anion derived from a single acid and substantially no other anion.

The exchange of the dopant causes a change in volume of the electrode as a whole. This is because, generally, dopant itself has a different molecular size depending on the kind (species) and a different relative position in conformation in relation to the electroconductive polymer cation of the dopant. In the polymer battery produced by the method of the present invention, although the positions of the dopant anions in conformation in relation to the electroconductive polymer cations of the dopant anion will gradually vary in accordance with charging and discharging are repeated to cause volume change in the electrode materials, the amount of such a volume change is very smaller as compared with that caused by the exchange of the dopant with different dopant species.

Generally, in conventional polymer batteries, repetitive volume change of electrodes by repeated charging and discharging results in accumulated structural deterioration in the electrodes, which causes a reduction in capacity with a lapse of time. In contrast, in the polymer battery produced by the method of the present invention, a decrease in capacity with a lapse of time is less and milder so that it has extremely excellent cycle characteristics.

In particular, when the exchange of dopant occurs, generally the volume change of the entire electrode materials is maximal in an initial stage of use after the fabrication of a polymer battery so that a decrease in capacity in an initial stage of use is remarkable. For example, at first, a material that has not been preliminarily doped is used as an electroconductive polymer for anode active material, the following phenomenon occurs. That is, at the time of the first use, the anion species existing in a free state in the electrolytic solution in the vicinity of the cation species of the electroconductive polymer is incorporated into the electrode material as a dopant ion (counter-anion) during the doping process (oxidation reaction) for the first time. Therefore, as compared with the case where a material that has been doped in advance is used, the change in volume and the change in the structure inside the electrode material that occur at that time are relatively large, so that a decrease in capacity at the initial stage of use is considerable.

In contrast, in the polymer battery produced by the method of the present invention, an electroconductive polymer that has introduced therein in advance the same anion species as the anion species derived from the supporting electrolyte in the electrolytic solution as a dopant is used in order to prepare pastes for forming the electrodes. The cathode and the anode are formed using these pastes. Therefore, changes in volume of electrodes occurred in an initial stage of use and at the time of introducing the dopant can be substantially avoided. As a result, a decrease in capacity is prevented and the cycle characteristics are considerably improved.

Furthermore, in the polymer battery produced by the method of the present invention, microscopic structural changes inside the electrode materials are substantially negligible, so that an increase in electrode resistance due to structural changes inside the electrode materials in the conventional polymer batteries is prevented. Generally, such an increase in electrode resistance inside the electrode materials becomes greater at an increased current density at the time of discharging. However, in the polymer battery produced by the method of the present invention, the degree of acceleration of increase in electrode resistance is suppressed to relatively low levels even when the current density at the time of discharging is increased because the increase in electrode resistance is small. That is, even if the current density is increased at the time of discharging, the electrode resistance does not increase relatively, and as a result, the amount of decrease in voltage due to the increase in electrode resistance becomes relatively small, so that the decrease in capacity is relatively suppressed and the high-rate characteristics are excellent.

Thus, in the polymer battery produced by the method of the present invention, the structural changes inside the electrode materials, which accumulate with a lapse of time, while charging and discharging are being repeated, are suppressed in themselves and the above-mentioned excellent high-rate characteristics are substantially retained in spite of the repeated charging and discharging.

Next, referring to FIG. 1, an embodiment of the method for producing a polymer battery according to the present invention will be specifically illustrated with reference to the drawings. The method of the present invention comprises the step of coating respective surfaces of a cathode current collector 1 and an anode current collector 6 with pastes comprising active materials composed of electroconductive polymers, respectively, which is different from each other and doped with the same dopant anion, to form a cathode 2 and an anode 4, respectively; the step of arranging the cathode 2 and the anode 4 on respective surfaces of a separator 3 composed of a porous polymer, which is impregnated with an electrolytic solution having dissolved therein a supporting electrolyte containing the same anion as the dopant anion for the cathode 2 and the anode 4; and the step of arranging a frame-shaped gasket 5 on each side of the cathode 2, the anode 4 and the separator 3 and bonding upper and lower ends of the gasket 5 to the cathode current collector 1 and the anode current collector 6, respectively.

In the polymer battery produced by the method of the present invention, the electroconductive polymers as the active materials of the cathode and the anode which is utilized for the battery are selected from materials that can be doped with the same dopant ion species. The dopant ion species is the same anion as that derived from a single acid, which is produced upon electrolysis of the supporting electrolyte contained in the electrolytic solution.

Therefore, combinations of electroconductive polymers with which a desired operating potential difference at

the time of discharging are selected from among various electroconductive polymers that can be utilized as a cathode active material of the polymer battery and various electroconductive polymers that can be utilized as an anode active material of the polymer battery. Then, from among these combinations, those combinations that allow doping of the same anion species as that derived from a single acid in the supporting electrolyte contained in the electrolytic solution as a dopant ion at a predetermined concentration are selected.

Also, in the selection of the electroconductive polymer, it is necessary to select those electroconductive polymers that are not susceptible to irreversible chemical reactions such as substitution reaction, oxidation reaction, and reduction reaction by the supporting electrolyte itself contained in the electrolytic solution. In other words, the electroconductive polymers are selected as follows. Except the oxidation reaction and reduction reaction during the charging and discharging processes are reversible, the electroconductive polymers which undergo no irreversible chemical reaction that could give adverse effects on the characteristics of the electroconductive polymers as the cathode and anode active materials while they are in contact with the electrolytic solution are selected. Generally, a macromolecular polymer which polymerizes a monomer molecule can be utilized, similarly to the conventional polymer battery.

Preferred examples of the combination of the electroconductive polymers of the active materials of cathode and anode in the polymer battery produced by the method of the present invention include combinations of indole polymers represented by the following formula (1), more specifically, poly-5-cyanoindole or the like is used for the electroconductive polymers of the cathode active material, and polyphenylquinoxalines represented by the following formula

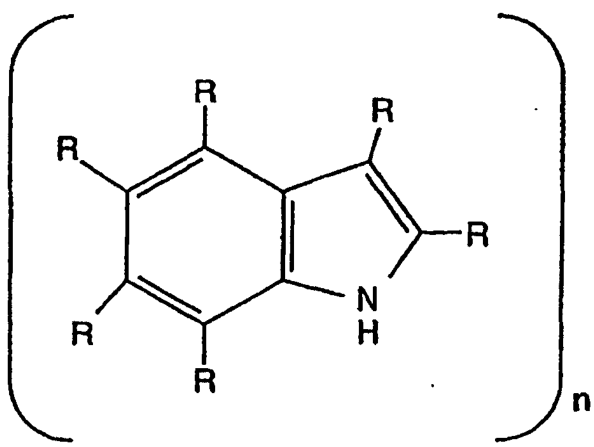

(1)

(2).

(wherein R represents a hydrogen atom, a halogen atom, a hydroxyl group, a carboxyl group, a sulfone group, a sulfuric acid group, a nitro group, a cyano group, an alkyl group, an aryl group, an alkoxy group, and amino group, an alkylthio group, and an arylthio group, provided that at least one R has a substituent other than hydrogen atom.)

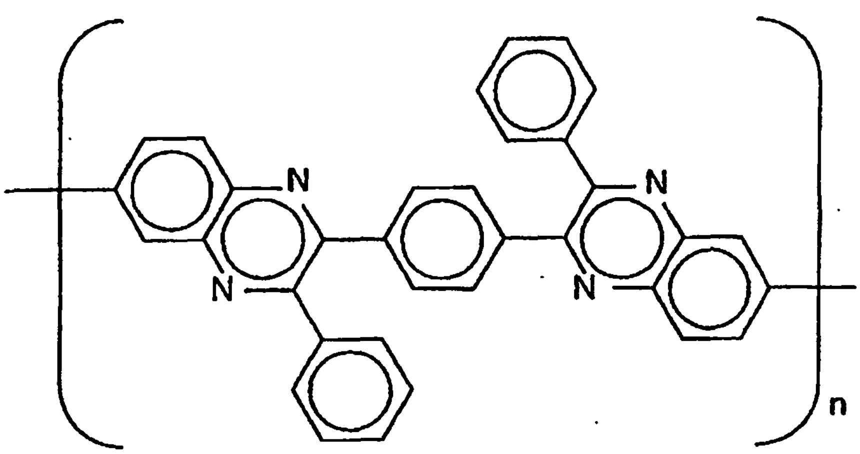

(2)

In the polymer battery produced by the method of the present invention, the electroconductive polymers of

the active materials in the cathode and the anode are doped with the same dopant ion in desired concentrations, respectively. When this doping is performed, the doping amount, i.e., the concentration of the dopant ion per electroconductive polymer may be optionally selected depending on the amount of electricity to be charged in the objective polymer battery. The electroconductive polymers of the active materials in the cathode and the anode are doped with protonic acid molecules as a dopant in the case where the dopant ion to be used is proton and protonic acid molecule. For example, the protonic acid molecule may be doped to the electroconductive polymer as an adduct (ligand).

The electroconductive polymers of the active materials in the cathode and the anode are obtained by polymerizing respective monomers corresponding to their structural units and giving desired ranges of degrees of polymerization, respectively. For example, the polymerization method for polymerizing electroconductive polymers includes electrolytic polymerization and chemical polymerization.

In the electrolytic polymerization, a material monomer is dissolved in a reaction solvent and is electrochemically oxidized to perform polymerization. On this occasion, addition of an electrolyte of a predetermined concentration that produces a dopant ion can give rise to a doped electroconductive polymer. Dopant ions tobe dopedmaybe selected depending on the supporting electrolyte used in the electrolytic solution of the polymer battery so that electroconductive polymers doped with the objective dopants can be obtained easily and in a simple manner.

The chemical polymerization method includes a polymerization method in which an oxidizing agent is used to oxidize the material monomer or a polymerization method in which one or more material monomers are dissolved in the reaction solvent and the polymerization of the monomer or monomers is performed with heating.

In the polymerization method using an oxidizing agent, the obtained polymer is doped with an anion derived from the oxidizing agent. Therefore, by optionally selecting the oxidizing agent to be used, the objective anion can be supplied to the reaction system, so that a doped electroconductive polymer containing a desired anion as a dopant can be obtained.

The electroconductive polymer obtained by the heat polymerization method usually contains no dopant. Therefore, an electroconductive polymer prepared by heat polymerization is treated in a solution containing an objective anion species to convert the polymer into a doped electroconductive polymer. Use of the method of treating the polymer in a solution enables doping of electroconductive polymers with an objective dopant regardless of the kind of the electroconductive polymer.

Also, the electroconductive polymers prepared by the above-mentioned electrolytic polymerization, polymerization with an oxidizing agent or the like preliminarily containing a dopant may be treated with an alkali solution to undope the dopant and again treated with a solution containing a desired anion species to redope them. By using this means, substitution of the dopant can be performed regardless of the kind of the electroconductive polymer. Also, in order to change the doping amount, the doped electroconductive polymers may be treated in a solution containing a desired anion species to perform additional doping. Alternatively, they may be subjected to the above-mentioned undoping and then be redoped.

In the method for producing a polymer battery according to the present invention, the electroconductive polymers of the active materials in the cathode and anode are doped with the dopant in the preferable doping amount as described below. That is, in the case where the doping is performed by the method of treating in a solution as described above, a doping amount is selected that is attained by using a solution having dissolved therein an electrolyte containing the objective anion in the range of $10^{-2}$ to 10 mol/l, more preferably $10^{-1}$ to 5 mol/l. Also, in the method of treating in a solution, it is preferable to use the same electrolyte as the supporting electrolyte contained in the electrolytic solution used for the polymer battery, as the electrolyte including an objective anion. Alternatively, in the method of treating in a solution, it is preferable to use a protonic acid corresponding to the electrolyte containing the objective anion species.

The cathode 2 is formed by using an electroconductive polymer having preliminarily doped a desired dopant in a predetermined concentration as a cathode active material and adhering it to the cathode current collector 1. In addition to the electroconductive polymer in the cathode active material, an electroconducting auxiliary may be mixed uniformly. A binder may be used to bond the components in the cathode active material, for example, electroconductive polymer molecules to each other, the electroconducting auxiliary to the electroconductive polymers, and the cathode to the cathode current collector 1 in order to form a film containing the electroconductive polymer of the cathode active material on the cathode current collector 1.

The film (cathode 2) containing the electroconductive polymer is formed by using known means. For example, an electroconductive polymer for a cathode active material, a binder and an additive such as an electroconducting auxiliary are added in a suitable film forming solvent and mixed uniformly using a homogenizer or the like. The mixture obtained is coated on the cathode current collector 1 using a doctor blade or the like. And then, the film obtained is dried to remove the solvent and to form an electroconducting polymer film as cathode 2. As the electroconducting auxiliary, vapor phase growth carbon or the like may be utilized. The addition amount of such an auxiliary may vary depending on the electroconductivity of the electroconductive polymer itself in the cathode active material, but it is usually in the range of 5 to 50% by weight, preferably 10 to 30% by weight based on the total weight of the cathode 2. As the binder, thermoplastic resins that can be used at low temperature, such as polyvinylidene fluoride may be used.

Its addition amount may be selected optionally in the range of up to 50% by weight based on the total weight of the cathode 2. The anode 4 may be formed by a method similar to that used in forming the cathode 2.

The solvent used in the electrolytic solution of the polymer battery may be any of water, inorganic solvents other than water, organic solvents and mixtures thereof as far as the objective supporting electrolyte can be dissolved therein in a desired concentration. Note that, the solvent itself must not cause damages such as, for example, dissolution, to the cathode 2 and the anode 4 and other parts of the polymer battery. The solvent is electrically nonconductive. The electrolytic solution is selected so as to show ion conductivity derived from the supporting electrolyte dissolved therein. Therefore, water that does not dissolve the electroconductive polymer is preferable. Also, solid electrolyte may be used in place of the electrolytic solution.

It is preferred that the amount of more than 80% of the anion contained in the electrolytic solution is occupied by the anion derived from a single acid, although it is the most preferable that the electrolytic solution contains only the anion derived from a single acid. In the above-mentioned preferred range, the advantageous effects of the present invention are not substantially deteriorated, even if other anion species are contained.

The supporting electrolyte contained in the electrolytic solution is to supply the same anion as the dopant doped in the electroconductive polymers in the activematerials of the cathode and anode. The supporting electrolyte may be either inorganic electrolytes or organic electrolytes as far as its anion is used as the dopant. Note that inorganic electrolytes such as, for example, inorganic acids are more preferred in view of the object of the present invention since inorganic acid anion species derived therefrom have molecular sizes generally smaller than those of normal organic acid anion species. Use of protonic acids makes it possible to use protons having higher mobility in the solvent, so that use of a protonic acid as the supporting electrolyte is preferred. Therefore, the anion derived from the single acid contained in the electrolyte is preferably an anion derived from the protonic acid that readily undergoes acid dissociation, more specifically, an anion species derived from a protonic acid that has a pKa value in a first dissociation stage inwater of at least pKa<2. Inparticular, use of inorganic protonic acids is more preferred. The organic protonic acid is preferably an organic acid which is excellent in stability per se, for example, at the time of charging and discharging. Thus, it is preferable to use fluorine-substituted organic acids, such as trifluoroacetic acid. Examples of the inorganic protonic acid include hydracids such as hydrohalogenic acid, e.g., hydrochloric acid, oxy acids such as sulfuric acid, perchloric acid, phosphoric acid, and nitric acid. Those inorganic protonic acids that are not susceptible themselves to electrochemical oxidation or reduction are preferred. Also in the case of inorganic protonic acids, those that undergo quick acid dissociation are preferred. Therefore, strong acids are preferred among the inorganic protonic acids , because it is preferred that acid dissociation is quickly conducted in the electrolytic solution. For example, those that are strong acids and highly stable, such as sulfuric acid, nitric acid and hydrochloric acid can be utilized as more preferred inorganic protonic acids. When using monobasic acids, the dopant ion fixed to the cation species in the electroconductive polymer as a counter-anion is made free and released into the electrolytic solution in the vicinity of the electrode material during the undoping process (reduction reaction). Strong acids of polybasic acids such as dibasic acids or more are preferable in the present invention since using the acids only changes their acid dissociation states from divalent to monovalent in the charge and of which are not released into the electrolytic solution in the vicinity of the electrode material.

The concentration of the supporting electrolyte contained in the electrolytic solutionmaybe optionally selected depending on the concentration of the dopant in the electroconductive polymers in the active materials of the cathode and anode. Usually, the concentration of the anion contained in the electrolytic solution is selected in the range of preferably $10^{-2}$ to 10 mol/l, more preferably $10^{-1}$ to 5 mol/l.

The materials of the cathode current collector 1, anode current collector 6, gasket 5 and separator 3 may be optionally selected depending on the kind of the supporting electrolyte contained in the electrolytic solution for holding the inside so that they have necessary chemical resistance and mechanical strength.

For example, the materials used on the sides of the cathode current collector 1 and anode current collector 6 that contact the electrolytic solution are electroconductive materials such as electroconductive rubber that has chemical resistance and is not permeable to the liquid. The current collectors may be formed of electroconductive rubber in their entirety or may be of a clad structure made of an electroconductive rubber and a metal plate.

As the material of the separator 3, a porous polymer material is used that has both a function of separating the cathode 2 and the anode 4 to prevent mechanical contact between them and a function of transmitting ions in the electrolytic solution. For example, a porous sheet film made of a polyfluoroethylene resin, more specifically, polytetrafluoroethylene (PTFE) resin, is a preferred example of the separator 3.

As the gasket 5, non-electroconducting material that has chemical resistance and is not permeable to the liquid is utilized. For example, the gasket 5 is formed preferably from an insulating rubber having chemical resistance to the supporting electrolyte in the electrolytic solution.

Hereinafter, the present invention will be illustrated in more detail with reference to the examples of the present invention. Although the examples described herein are examples of the best mode for carrying out the present invention, the present invention should not be construed as being limited thereto.

Example 1

A polymer battery having the structure shown in FIG. 1 was manufactured as follows.

(1) Manufacture of Cathode 2

Poly-5-cyanoindole of the following structural formula (3) was used as an active material of the cathode. Poly-5-cyanoindole was polymerized using an oxidizing agent. In the polymerization reaction, $Cl^-$ ions are remained. The residual $Cl^-$ ions were removed by treating the obtained polymer with an aqueous sodium hydroxide solution.

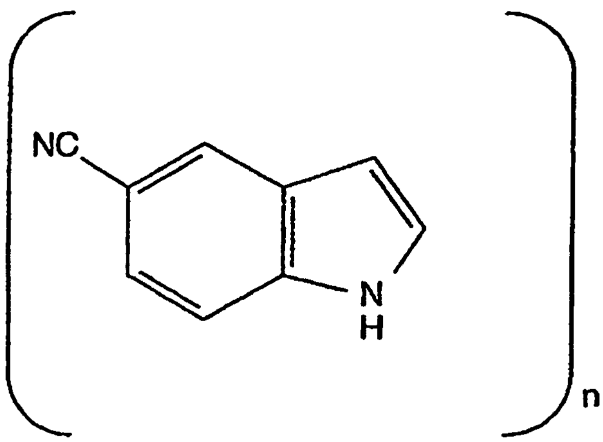

(3)

The $Cl^-$-free poly-5-cyanoindole was then treated in an aqueous 2 mol/l sulfuric acid to dope sulfate ions therein. To the doped poly-5-cyanoindole were added 20% by weight of gas phase deposited carbon as an electroconducting auxiliary and 10% by weight of polyvinylidene fluoride as a binder. Further, using N,N-dimethylformamide (DMF) as a film forming solvent, the mixture was well mixed to prepare a paste. The paste was coated on a cathode current collector 1 made of electroconductive rubber to form a film. After the film formation, the film was hot air-dried at 100°C for 1 hour to manufacture a cathode 2 having a thickness of about 200 μm.

(2) Manufacture of Anode 4

Polyphenylquinoxaline of the following structural formula (4) was treated with an aqueous 2 mol/l sulfuric acid solution to introduce sulfate ions as a dopant therein.

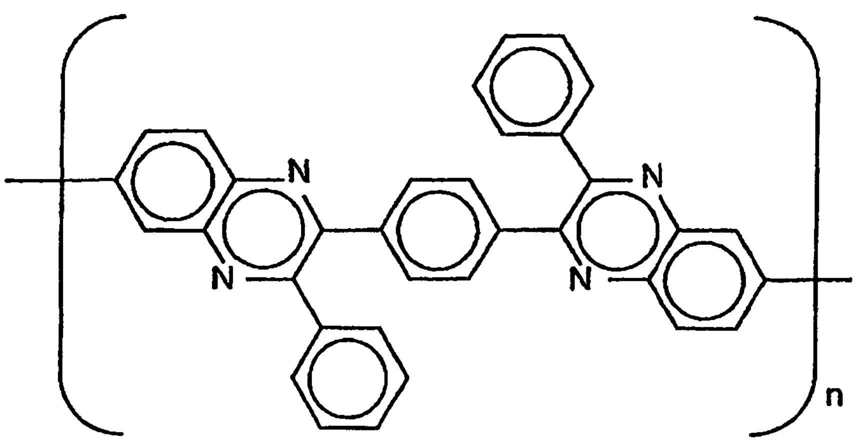

(4)

Then, to the polyphenylquinoxaline doped with sulfate ions were added 20% by weight of gas phase deposited carbon as an electroconducting auxiliary and 10% by weight of polyvinylidene fluoride as a binder. Further, DMF as a

film forming solvent was added and the mixture was mixed to prepare a paste using a homogenizer. The paste was coated on an anode current collector 6 made of electroconductive rubber to form a film. After the film formation, the film was hot air-dried at 100°C for 1 hour to manufacture an anode 4 having a thickness of about 200 μm.

(3) Manufacture of a polymer battery

The cathode 2 and the anode 4 manufactured in the above steps (1) and (2) were laminated so as to sandwich a separator 3 made of a porous sheet film of polytetrafluoroethylene (PTFE) impregnated with an aqueous 2M sulfuric acid solution as an electrolytic solution. On the sides of the separator 3 were arranged gaskets 5 made of insulating rubber and bonded to the upper and lower electroconductive rubber serving as the cathode current collector 1 and the anode current collector 6 to manufacture a polymer battery having the structure shown in FIG. 1.

The manufactured polymer battery was evaluated on its cycle characteristics under the conditions of charging at a current density of 10 $mA/cm^2$ to 1.2 V and discharging at a current density of 10 $mA/cm^2$ to 0.8 V. FIG. 2 shows the results obtained. As shown in FIG. 2, the polymer battery manufactured according to the present example showed a decrease in capacity after passing 10,000 cycles of about 14% of the initial capacity, thereby exhibiting excellent cycle characteristics.

Further, the manufactured polymer battery charged at a constant current of 10 $mA/cm^2$ until reaching 1.2 V and then discharged at a constant current of 10, 100 or 200 $mA/cm^2$ until reaching 0.8 V. FIG. 4 shows a decrease in voltage and accumulated discharge amount (capacity) at the time of this constant current discharging. Assuming that the capacity of at a discharging current of 10 $mA/cm^2$ is 100%, the decrease in capacity when the discharging current was increased to 100 $mA/cm^2$ was 26%. Further, the decrease in capacity when the discharging current was increased to 200 $mA/cm^2$ was 31%. Thus, the polymer battery exhibited very high high-rate characteristics. The average voltage between 1.2 V and 0.8 V in this discharging was 1,011 mV at a discharging current of 10 $mA/cm^2$, 996 mV at a discharging current of 100 $mA/cm^2$, and 966 mV at a discharging current of 200 $mA/cm^2$. A difference between the average voltage at a discharging current of 10 $mA/cm^2$ and the average voltage at a discharging current of 200 $mA/cm^2$ is within the range of 50 mV.

As shown in the present example, when electroconductive polymers differing from each other were used as the active materials of the cathode and the anode, the polymer battery constructed such that poly-5-cyanoindole initially containing anion different from the anion in the electrolytic solution as the cathode active material was preliminary undoped and then the both electroconductive polymers were doped with the same anion as the anion in the electrolytic solution demonstrated excellent cycle characteristics and high high-rate characteristics.

Example 2

In the present example, the structure of the manufactured polymer battery was the same as that shown in FIG. 1.

(1) Manufacture of Cathode 2

In the present example, the poly-5-cyanoindole of the formula (3) above shown in Example 1 was doped with chloride ions. As described in Example 1, the poly-5-cyanoindole was polymerized using an oxidizing agent so that the residual $Cl^-$ ions were contained therein as a dopant at the time of the reaction. In the present example, the chloride ion ($Cl^-$)-doped poly-5-cyanoindole was used as it was. To the ($Cl^-$)-doped poly-5-cyanoindole were added 20% by weight of gas phase deposited carbon as an electroconducting auxiliary and 10% by weight of polyvinylidene fluoride as a binder. Further, using N,N-dimethylformamide (DMF) as a film forming solvent, the mixture was mixed using a homogenizer to prepare a paste. The paste was coated on a cathode current collector 1 made of electroconductive rubber to form a film. After the film formation, the film was hot air-dried at 100°C for 1 hour to manufacture a cathode 2 having a thickness of about 200 μm.

(2) Manufacture of Anode 4

As the anode active material contained in the anode 4, the polyphenylquinoxaline used in Example 1 was doped with a chloride ion. Since the polyphenylquinoxaline immediately after the polymerization contained no dopant in the quinoxaline ring thereof, it was treated with 4 mol/l hydrochloric acid to introduce a $Cl^-$ ion as a dopant therein. Then, to the obtained polyphenylquinoxaline were added 20% by weight of gas phase deposited carbon as an electroconducting auxiliary and 10% by weight of polyvinylidene fluoride as a binder. Further, DMF as a film forming solvent was added and the obtained mixture was mixed to prepare a paste using a homogenizer. The paste was coated on an anode current collector 6 made of electroconductive rubber to form a film. After the film formation, the film was hot

air-dried at 100°C for 1 hour to manufacture an anode 4 having a thickness of about 200 µm.

(3) Manufacture of a polymer battery

The cathode 2 and the anode 4 manufactured in the above steps (1) and (2) were laminated so as to sandwich a separator 3 made of a porous sheet film of polytetrafluoroethylene (PTFE) impregnated with an aqueous 2M sulfuric acid solution as an electrolytic solution. On the sides of the separator 3 were arranged gaskets 5 made of insulating rubber and bonded to the upper and lower electroconductive rubber serving as the cathode current collector 1 and the anode current collector 6 to manufacture a polymer battery having the structure shown in FIG. 1.

The polymer battery manufactured in the present example was evaluated on its cycle characteristics under the same conditions as in Example 1. As a result, it was demonstrated that as shown in FIG. 2, the polymer battery manufactured according to the present example showed a decrease in capacity after passing 10, 000 cycles of about 24% of the initial capacity, thereby exhibiting excellent cycle characteristics.

Example 3

Also in the present example, the structure of the manufactured polymer battery was the same as that shown in FIG. 1 and manufactured by the same procedures as in Example 1.

(1) Manufacture of Cathode 2

In the same manner as in Example 1, the poly-5-cyanoindole of the structural formula (3) shown in Example 1 was used as the cathode active material. First it was treated with an aqueous sodium hydroxide solution to undope $Cl^-$ contained therein. Then, the chloride ion ($Cl^-$)-undoped poly-5-cyanoindole was treated with an aqueous 2 mol/l perchloric acid solution to introduce a $ClO_4^-$ ion as a dopant therein. To the obtained ($ClO_4^-$)-doped poly-5-cyanoindole were added 20% by weight of gas phase deposited carbon as an electroconducting auxiliary and 10% by weight of polyvinylidene fluoride as a binder. Further, using N,N-dimethylformamide (DMF) as a film forming solvent, the mixture was mixed using a homogenizer to prepare a paste. The paste was coated on a cathode current collector 1 made of electroconductive rubber to form a film. After the film formation, the film was hot air-dried at 100°C for 1 hour to manufacture a cathode 2 having a thickness of about 200 µm.

(2) Manufacture of Anode 4

As the anode active material contained in the anode, the polyphenylquinoxaline of the formula (4) used in Example 1 was treated with an aqueous 2 mol/l perchloric acid solution to introduce $ClO_4^-$ ion as a dopant therein. Then, to the obtained ($ClO_4^-$)-doped polyphenylquinoxaline were added 20% by weight of gas phase deposited carbon as an electroconducting auxiliary and 10% by weight of polyvinylidene fluoride as a binder. Further, DMF as a film forming solvent was added and the obtained mixture was mixed to prepare a paste using a homogenizer. The paste was coated on an anode current collector 6 made of electroconductive rubber to form a film. After the film formation, the film was hot air-dried at 100°C for 1 hour to manufacture an anode 4 having a thickness of about 200 µm.

(3) Manufacture of a polymer battery

The cathode 2 and the anode 4 manufactured in the above steps (1) and (2) above were laminated so as to sandwich a separator 3 made of a porous sheet film of polytetrafluoroethylene (PTFE) impregnated with an aqueous 2 mol/l sulfuric acid solution as an electrolytic solution. On the sides of the separator 3 were arranged gaskets 5 made of an insulating rubber and bonded to the upper and lower electroconductive rubbers serving as the cathode current collector 1 and the anode current collector 6 to manufacture a polymer battery having the structure shown in FIG. 1.

The polymer battery manufactured in the present example was evaluated on its cycle characteristics under the same conditions as in Example 1. FIG. 2 shows the results obtained. As shown in FIG. 2, the polymer battery manufactured according to the present example showed a decrease in capacity after passing 10,000 cycles of about 20% of the initial capacity, thereby exhibiting excellent cycle characteristics.

Comparative Example 1

Also in the present comparative example, the structure of the manufactured polymer battery was the same as that shown in FIG. 1.

In order to compare the polymer battery with the polymer battery obtained in Example 1 above of the present

invention, a polymer battery was manufactured as follows. The poly-5-cyanoindole of the structural formula (3) in Example 1 above initially containing $Cl^-$ ions was used as it was as the cathode active material to be contained in the cathode 2 without undoping of the $Cl^-$ ions. On the other hand, nondoped polyphenylquinoxaline of the structural formula (4) in Example 1 above was used as the anode active material to be contained in the anode 4. The electrolytic solution used in the polymer battery of the present comparative example was the same as the aqueous 2 mol/l sulfuric acid solution as that in Example 1. The polymer battery was assembled in the same manner as in Example 1.

The polymer battery manufactured in this Comparative Example 1 was evaluated on its cycle characteristics under the same conditions as in Example 1. FIG. 3 shows the results obtained. As shown in FIG. 3, the polymer battery manufactured according to the present comparative example showed a decrease incapacity after passing 10,000 cycles of about 35% of the initial capacity, which was as large as about 2.5 times the corresponding value of the polymer battery of Example 1 shown in FIG. 2. Analyzing in detail the decrease with a lapse of time in capacity of the polymer battery of Comparative Example 1 with respect to the initial capacity, it revealed that about 18% of decrease in capacity has occurred up until 2,000 cycles . This shows that the comparative polymer battery underwent a faster decrease in capacity than that the polymer battery of Example 1 did.

Also, the discharge characteristics of the polymer battery of the present comparative example was measured at a constant current discharging under the same conditions as in Example 1. FIG. 5 shows the results obtained. As shown in FIG. 5, assuming that the capacity of at a discharging current of 10 $mA/cm^2$ is 100%, the decrease in capacity when the discharging current was increased to 100 $mA/cm^2$ was as high as 40%. Further, the decrease in capacity when the discharging current was increased to 200 $mA/cm^2$ reached 53%. The average voltage between 1.2 V and 0.8 V in this discharging was 1,021 mV at a discharging current of 10 $mA/cm^2$, 965 mV at a discharging current of 100 $mA/cm^2$, and 909 mV at a discharging current of 200 $mA/cm^2$. A difference between the average voltage at a discharging current of 10 $mA/cm^2$ and the average voltage at a discharging current of 200 $mA/cm^2$ exceeded 100 mV.

Comparative Example 2

Also in the present comparative example, the structure of the manufactured polymer battery was the same as that shown in FIG. 1 as in the above Example 2.

In order to compare the polymer battery with the polymer battery obtained in Example 2 above, a polymer battery was manufactured as follows. The poly-5-cyanoindole of the structural formula (3) above doped with chloride ($Cl^-$) ions was used as the cathode active material to be contained in the cathode 2. As described in Example 1, the poly-5-cyanoindole was polymerized using an oxidizing agent so that the residual $Cl^-$ ions were contained therein as a dopant at the time of the reaction. In the present comparative example, the chloride ion ($Cl^-$)-doped poly-5-cyanoindole was used as it was.

On the other hand, nondoped polyphenylquinoxaline of the structural formula (4) in Example 1 was used as the anode active material to be contained in the anode 4. Since the polyphenylquinoxaline immediately after the polymerization contained no dopant in the quinoxaline ring thereof, it was used as it was as the anode active material. Hydrochloric acid, which is an electrolyte containing chloride ion, was used as the electrolytic solution.

Films of the cathode 2 and the anode 4 were formed by the procedures described in Example 1 above to manufacture a polymer battery.

The polymer battery manufactured in this Comparative Example 2 was evaluated on its cycle characteristics under the same conditions as in Example 1 above. FIG. 3 shows the results obtained. As shown in FIG. 3, the polymer battery manufactured according to the present comparative example showed a decrease incapacityafterpassing 10, 000 cycles of about 50% of the initial capacity. This value was as large as about 2 times the corresponding value of the polymer battery of Example 2 of the present invention. Analyzing in detail the decrease with a lapse of time in the capacity of the polymer battery of Comparative Example 1 with respect to the initial capacity, it revealed that about 30% of decrease in capacity has already occurred up until 2,000 cycles. This shows that the comparative polymer battery underwent a faster decrease in capacity than that the polymer battery of Example 2 did.

Comparative Example 3

Also in the present comparative example, the structure of the manufactured polymer battery was the same as in Example 3 which is shown in FIG. 1.

In the present comparative example, in order to compare the polymer battery with the polymer battery obtained in Example 1 of the present invention, a polymer battery was manufactured as follows. The poly-5-cyanoindole of the structural formula (3) in Example 1 above initially containing $Cl^-$ ions was used as it was as the cathode active material to be contained in the cathode 2 without undoping of the $Cl^-$ ions. On the other hand, nondoped polyphenylquinoxaline of the structural formula (4) in Example 1 above was used as the anode active material to be contained in the anode 4. The electrolytic solution used in the polymer battery of the present comparative example was the same as the

aqueous 2 mol/l perchloric acid solution of Example 3. The polymer battery was assembled in the same manner as in Example 1.

The polymer battery manufactured in Comparative Example 3 was evaluated on its cycle characteristics under the same conditions as in Example 1. FIG. 3 shows the results obtained. As shown in FIG. 3, the polymer battery manufactured according to the present comparative example showed a decrease in capacity after passing 10, 000 cycles of 39% of the initial capacity. This value was as large as about 2 times the corresponding value of the polymer battery of Example 3 as shown in FIG. 2. Analyzing in detail the decrease with a lapse of time in the capacity of the polymer battery of this Comparative Example 3 relative to the initial capacity, it revealed that about 20% of decrease in capacity has occurred up until 2,000 cycles . This shows that the comparative polymer battery underwent a faster decrease in capacity than that the polymer battery of Example 3 of the present invention did.

TABLE 1 below summarized the results of evaluation on the cycle characteristics of the polymer batteries manufactured in Examples 1 to 3 shown in FIG. 2 and those of evaluation on the cycle characteristics of the polymer batteries manufactured in Comparative Examples 1 to 3 shown in FIG. 3. TABLE 1 also shows presence or absence of doping in the cathode active materials and the anode active materials, the kind of the dopant, and the kind of the anion contained in the electrolytic solution.

Referring to TABLE 1, the polymer batteries manufactured in Examples 1 to 3 above exhibited a discharge capacity after 10,000 cycles of charging and discharging of 76% or more of the initial capacity. This demonstrates that the cycle characteristics are considerably improved as compared with the polymer batteries of Comparative Examples 1 to 3.

In the polymer batteries of Comparative Examples 1 to 3 above, while charging and discharging are repeated, exchange of the dopant initially or preliminarily doped in the cathode active material or anode active material with the anion contained in the electrolytic solution proceeds. This exchange of the dopant proceeds mainly in an earlier stage of charging and discharging and an abrupt change in the capacity occurs during the exchange of the dopant.

TABLE 1

| | CATHODE DOPANT | ANODE DOPANT | ELECTROLYTE ANION | DISCHARGE CAPACITY (AFTER 10000CYCLES) |
|---|---|---|---|---|
| EXAMPLE 1 | $SO_4^{2-}$ | $SO_4^{2-}$ | $SO_4^{2-}$ | 86% |
| EXAMPLE 2 | $Cl^-$ | $Cl^-$ | $Cl^-$ | 76% |
| EXAMPLE 3 | $ClO_4^-$ | $ClO_4^-$ | $ClO_4^-$ | 80% |
| COMPARATIVE EXAMPLE 1 | $Cl^-$ | NONE | $SO_4^{2-}$ | 65% |
| COMPARATIVE EXAMPLE 2 | $Cl^-$ | NONE | $Cl^-$ | 50% |
| COMPARATIVE EXAMPLE 3 | $Cl^-$ | NONE | $ClO_4^-$ | 61% |

In Examples 1 to 3 of the present invention, the electrode active materials with the same anion as that contained in the electrolytic solution was used to manufacture polymer batteries. As a result, in initial stages of charging and discharging, an abrupt change in capacity accompanied by the exchange of dopant species can be effectively avoided so that the cycle characteristics of the polymer batteries can be improved considerably.

TABLE 2 shows discharge capacities and average voltages calculated from the high-rate characteristics of the polymer battery of Example 1 shown in FIG. 4 and the high-rate characteristics of the polymer battery of Comparative Example 1 shown in FIG. 5 in comparison. At low levels of discharge current, no remarkable difference can be observed between the current and discharge characteristics. However, in accordance with increase in the discharge current, there is observed a clear difference between the discharge capacities. That is, decreases in discharge capacity and in average voltage at high discharge current are considerably suppressed in the polymer battery of Example 1 as compared with the polymer battery of Comparative Example 1.

TABLE 2

| | DISCHARGE RATE(mA/cm$^2$) | EXAMPLE 1 | COMPARATIVE EXAMPLE 1 |
|---|---|---|---|
| DISCHARGE CAPACITY | 10 | 100% | 100% |
| | 100 | 74% | 60% |
| | 200 | 69% | 47% |
| AVERAGE VOLTAGE | 10 | 1011mV | 1021mV |
| | 100 | 996mV | 965mV |
| | 200 | 966mV | 909mV |
| (NOTE) DISCHARGE CAPACITY IS PRESENTED AS THE RELATIVE VALUE BY THAT IN 10 mA/cm$^2$ | | | |

**Claims**

1. A method for producing a polymer battery, comprising the steps of:

    coating respective surfaces of a cathode current collector and an anode current collector with pastes comprising active materials composed of electroconductive polymers, said electroconductive polymers differing from each other and doped with a same dopant anion, to form a cathode and an anode, respectively;
    arranging said cathode and said anode on both surfaces of a separator comprising a porous polymer, said porous polymer being impregnated with an electrolytic solution having dissolved therein a supporting electrolyte containing a same anion as said dopant anion for said cathode and said anode; and
    arranging a frame-shaped gasket on each side of said cathode, said anode and said separator, upper and lower ends of said gasket bonding to said cathode current collector and said anode current collector, respectively.

2. A method for producing a polymer battery according to claim 1, wherein 80% or more of anions contained in said electrolytic solution comprise anions derived from a single acid and said dopant anion is the same as the anion derived from said single acid.

3. A method for producing a polymer battery according to claim 2, wherein said single acid contained in said electrolytic solution is a protonic acid having a pKa value in a first dissociation stage in water of at least pKa<2.

4. A method for producing a polymer battery according to claim 3, wherein said protonic acid is an inorganic protonic acid.

5. A method for producing a polymer battery according to claim 3, wherein said protonic acid is a strong acid.

6. A method for producing a polymer battery according to claim 3, wherein said protonic acid is a dibasic acid.

7. A method for producing a polymer battery according to claim 1, wherein at least one of said electroconductive polymers differing each other initially contains an anion differing from said dopant anion and is subjected to alkali treatment prior to introduction of said dopant anion therein.

8. A method for producing a polymer battery according to claim 1, wherein said paste comprises an electroconducting auxiliary and a binder.

**Patentansprüche**

1. Verfahren zum Herstellen einer Polymerbatterie mit den Schritten:

    Beschichten jeweiliger Oberflächen eines Kathodenstromkollektors und eines Anodenstromkollektors mit Pasten, die aktive Materialien aus elektroleitfähigen Polymeren aufweist, wobei die elektroleitfähigen Polymere

sich voneinander unterscheiden und mit demselben Dotierungsion dotiert sind, um eine Kathode bzw. eine Anode zu bilden,
Anordnen der Kathode und der Anode auf beiden Oberflächen eines Separators, der ein poröses Polymer aufweist, wobei das poröse Polymer mit einer elektrolytischen Lösung imprägniert ist, in der ein Trägerelektrolyt aufgelöst ist, der dasselbe Anion wie das Dotierungsanion für die Kathode und die Anode aufweist, und
Anordnen einer rahmenförmigen Dichtung auf jeder Seite der Kathode, der Anode und des Separators, wobei obere und untere Enden der Dichtung mit dem Kathodenstromkollektor bzw. dem Anodenstromkollektor verbunden sind.

**2.** Verfahren zum Herstellen einer Polymerbatterie nach Anspruch 1, wobei 80% oder mehr Anionen, die in der elektrolytischen Lösung enthalten sind, Anionen aufweisen, die von einer einzelnen Säure abgeleitet sind, und das Dotierungsanion dasselbe wie das Anion ist, das von der einzelnen Säure abgeleitet ist.

**3.** Verfahren zum Herstellen einer Polymerbatterie nach Anspruch 2, wobei die einzelne Säure, die in der elektrolytischen Lösung enthalten ist, eine Protonensäure mit einem pKa-Wert in einer ersten Lösungsstufe in Wasser von zumindest pKa<2 ist.

**4.** Verfahren zum Herstellen einer Polymerbatterie nach Anspruch 3, wobei die Protonensäure eine anorganische Protonensäure ist.

**5.** Verfahren zum Herstellen einer Polymerbatterie nach Anspruch 3, wobei die Protonensäure eine starke Säure ist.

**6.** Verfahren zum Herstellen einer Polymerbatterie nach Anspruch 3, wobei die Protonensäure eine dibasische Säure ist.

**7.** Verfahren zum Herstellen einer Polymerbatterie nach Anspruch 1, wobei zumindest eins der elektroleitfähigen Polymere, die sich voneinander unterscheiden, anfänglich ein Anion enthält, das sich von dem Dotierungsanion unterscheidet, und einer Alkalibehandlung vor dem Einbringen des Dotierungsanions unterzogen wird.

**8.** Verfahren zum Herstellen einer Polymerbatterie nach Anspruch 1, wobei die Paste ein elektroleitfähiges Hilfsmittel und einen Binder aufweist.

## Revendications

**1.** Procédé de fabrication d'une batterie à polymère, comprenant les étapes consistant à :

recouvrir les surfaces respectives d'un collecteur de courant cathodique et d'un collecteur de courant anodique avec des pâtes comprenant des matériaux actifs composés de polymères électroconducteurs, lesdits polymères électroconducteurs étant différents les uns des autres et dopés avec un même anion dopant, pour former respectivement une cathode et une anode ;
disposer ladite cathode et ladite anode sur les deux surfaces d'un séparateur comprenant un polymère poreux, ledit polymère poreux étant imprégné d'une solution électrolytique ayant dissous un électrolyte support contenant un même anion que ledit anion dopant pour ladite cathode et ladite anode ; et
disposer un joint d'étanchéité en forme de cadre sur chaque côté de ladite cathode, de ladite anode et dudit séparateur, les extrémités supérieure et inférieure dudit joint d'étanchéité étant liées respectivement audit collecteur de courant cathodique et audit collecteur de courant anodique.

**2.** Procédé de fabrication d'une batterie à polymère selon la revendication 1, dans lequel au moins 80% des anions contenus dans ladite solution électrolytique comprennent des anions dérivés d'un acide unique et ledit anion dopant est le même que l'anion dérivé dudit acide unique.

**3.** Procédé de fabrication d'une batterie à polymère selon la revendication 2, dans lequel ledit acide unique contenu dans ladite solution électrolytique est un acide protonique ayant une valeur de pKa dans une première étape de dissociation dans l'eau d'au moins pKa<2.

**4.** Procédé de fabrication d'une batterie à polymère selon la revendication 3, dans lequel ledit acide protonique est un acide protonique inorganique.

**5.** Procédé de fabrication d'une batterie à polymère selon la revendication 3, dans lequel ledit acide protonique est un acide fort.

**6.** Procédé de fabrication d'une batterie à polymère selon la revendication 3, dans lequel ledit acide protonique est un acide dibasique.

**7.** Procédé de fabrication d'une batterie à polymère selon la revendication 1, dans lequel au moins un desdits polymères électroconducteurs différents les uns des autres contient initialement un anion se différentiant de l'anion dopant et est soumis à un traitement alcalin avant l'introduction dudit anion dopant dedans.

**8.** Procédé de fabrication d'une batterie à polymère selon la revendication 1, dans lequel ladite pâte comprend un auxiliaire électroconducteur et un liant.

FIG.1

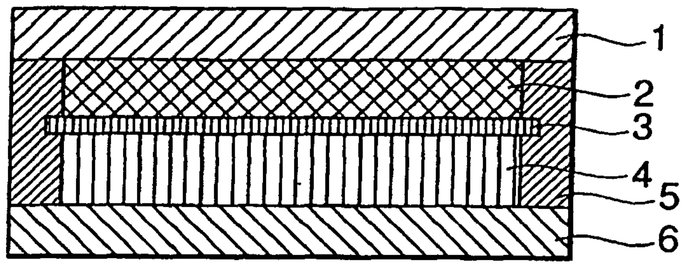
1
2
3
4
5
6

FIG.2

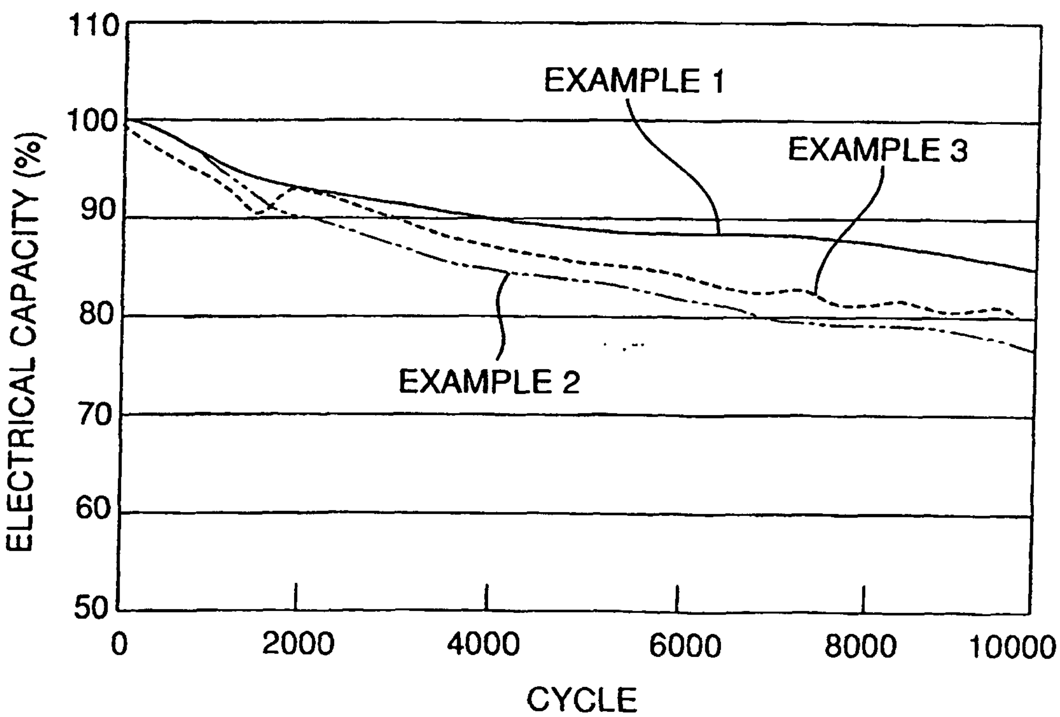
110
100
90
80
70
60
50
ELECTRICAL CAPACITY (%)
EXAMPLE 1
EXAMPLE 3
EXAMPLE 2
0
2000
4000
6000
8000
10000
CYCLE

FIG.3

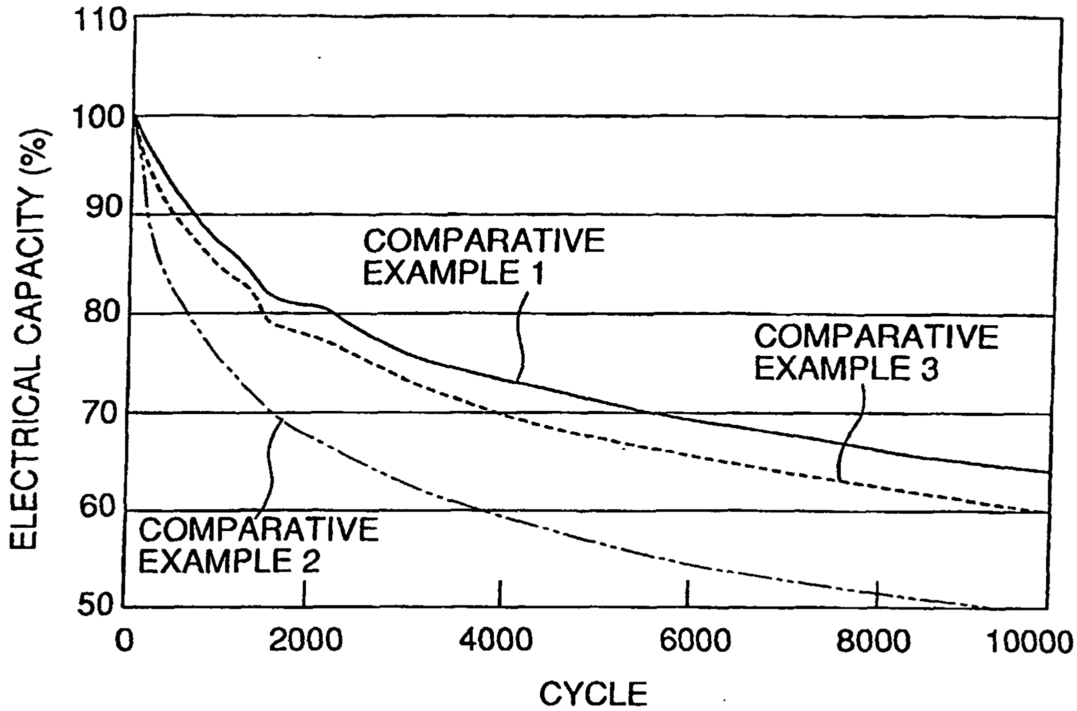
110
100
90
80
70
60
50
ELECTRICAL CAPACITY (%)
0
2000
4000
6000
8000
10000
CYCLE
COMPARATIVE EXAMPLE 1
COMPARATIVE EXAMPLE 2
COMPARATIVE EXAMPLE 3

FIG.4

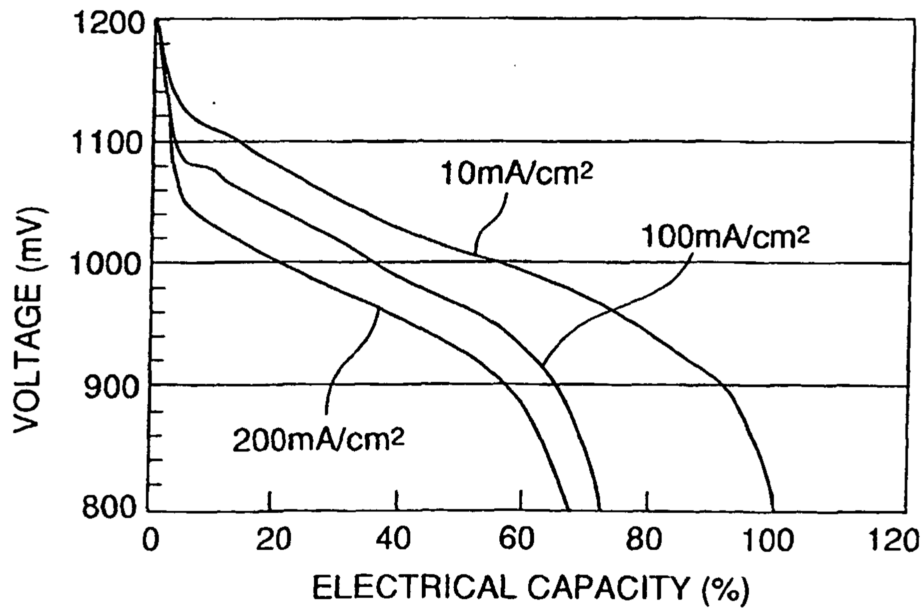
1200
1100
1000
900
800
VOLTAGE (mV)
0
20
40
60
80
100
120
ELECTRICAL CAPACITY (%)
10mA/cm2
100mA/cm2
200mA/cm2

FIG.5

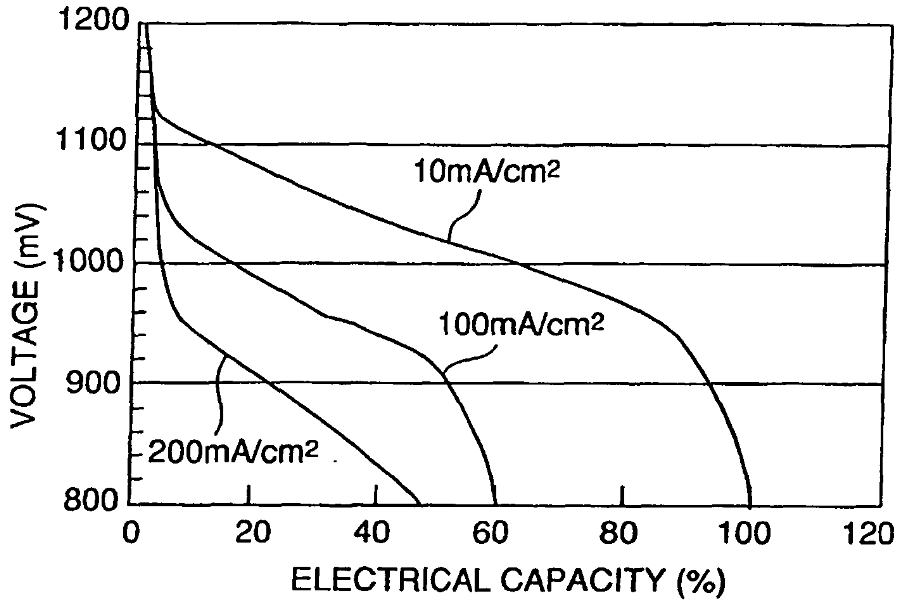
1200
1100
1000
900
800
VOLTAGE (mV)
10mA/cm2
100mA/cm2
200mA/cm2
0
20
40
60
80
100
120
ELECTRICAL CAPACITY (%)